# FASCICULE DE BREVET EUROPEEN

(11) **EP 3 124 328 B1**
(45) Date de publication et mention de la délivrance du brevet: **21.08.2019**
(21) Numéro de dépôt: 16181343.1
(22) Date de dépôt: 26.07.2016
(51) Int. Cl.: B60R 9/058

(54) **BARRE DE TOIT**
DACHLASTENTRÄGER
ROOF BAR

(30) Priorité: 29.07.2015 FR 1557252
(43) Date de publication de la demande: 01.02.2017
(73) Titulaire: NOVARES FRANCE, 92140 Clamart (FR)
(72) Inventeur: COMBE, Philippe, 01100 GEOVREISSET (FR); HUGUET, Guillaume, 01250 CHAVANNES SUR SURAN (FR); BARTOLI, Jean-François, 98000 MONACO (FR)
(74) Mandataire: Delorme, Nicolas

(56) Documents cités:
- EP-A1- 2 554 768
- EP-A1- 2 783 919
- DE-A1- 4 438 408
- US-A- 5 826 765

## Description

La présente invention concerne une barre de toit destinée à être positionnée sur le toit d'un véhicule.

Il est connu d'utiliser des barres de toit pour supporter, par exemple, un coffre de toit ou un porte-vélos sur le toit d'un véhicule.

Le plus souvent, les barres de toit transversales sont accrochées sur des barres longitudinales fixées au véhicule lors de sa fabrication. La fixation des barres de toit transversales aux barres longitudinales est souvent réalisée au moyen d'un ensemble vis-écrou traversant la barre de toit transversale et la barre longitudinale. De même, il est connu d'utiliser des mâchoires réglables positionnées à chaque extrémité de la barre de toit transversale et configurées pour serrer chacune une barre longitudinale.

Le document US5826765 décrit une barre de toit conforme au préambule de la revendication 1.

Une autre solution connue du document FR2932439 consiste à utiliser des barres de toit pivotantes entre une position longitudinale et une position transversale. La barre de toit comprend alors un crochet à chacune de ses extrémités et un câble reliant les deux crochets. Cette solution alourdit la barre de toit ce qui, à terme, augmente la consommation énergétique du véhicule sur lequel la barre de toit est installée.

En conséquence, la présente invention a pour objectif de fournir une barre de toit qui puisse être fixée au toit d'un véhicule en utilisant un mécanisme de verrouillage léger et sécurisé.

Selon une définition générale, l'invention concerne une barre de toit qui comprend un profilé et un organe de verrouillage destiné à venir s'engager dans une ouverture quadrangulaire positionnée sur le toit d'un véhicule. L'organe de verrouillage comprend une lyre de retenue et un noyau asymétrique lié en rotation dans la lyre de retenue pour faire passer, lors de la rotation du noyau, la lyre de retenue d'une position rétractée dans laquelle la lyre de retenue est amovible de l'ouverture quadrangulaire à une position expansée dans laquelle la lyre de retenue est verrouillée dans l'ouverture quadrangulaire.

Ainsi, l'organe de verrouillage permet de fixer la barre de toit dans une ouverture quadrangulaire aménagée, par exemple, sur un support rapporté sur le toit tel que les pieds servant pour tenir des barres de toit longitudinales. De plus la commande de la lyre de retenue par le noyau permet à la barre de toit d'être verrouillée au toit de manière sécurisée, en réduisant les risques de déverrouillage non prévus. En outre, le nombre réduit de pièces de l'organe de verrouillage permet à la barre de toit d'être légère et permet donc de diminuer la consommation énergétique d'un véhicule muni d'une telle barre de toit.

Ainsi, l'invention propose une barre de toit qui peut être fixée directement au toit d'un véhicule en utilisant un mécanisme de verrouillage léger et sécurisé.

Le noyau peut être relié à un levier de commande manoeuvrable entre une position de déverrouillage dans laquelle la lyre de retenue est rétractée et une position de verrouillage dans laquelle la lyre de retenue est expansée.

Le profilé peut présenter un logement configuré pour recevoir le levier de commande en position de verrouillage.

Selon un mode de réalisation, le levier de commande peut présenter une protubérance configurée pour être encliquetée dans un organe d'encliquetage du logement.

Cette disposition technique permet d'augmenter la sécurité de l'organe de verrouillage.

Selon un mode de réalisation, le noyau peut présenter au moins une dent et la lyre de retenue peut présenter au moins une patte configurée pour s'engager sur la dent, pour faire passer la lyre de retenue en position rétractée.

La lyre de retenue peut présenter deux ailes incurvées en forme de V, une portion de chaque aile étant configurée pour venir en appui contre un pan incliné respectif de l'ouverture quadrangulaire.

Selon un mode de réalisation, chaque aile de la lyre de retenue peut présenter une nervure intérieure d'appui contre le noyau.

Selon un mode de réalisation, chaque aile de la lyre de retenue peut présenter une surface d'appui inférieure et une surface d'appui supérieure, contre le noyau.

Selon un mode de réalisation, le noyau peut comprendre une came présentant une section sensiblement elliptique, la came étant configurée pour exercer un effort sur la nervure intérieure d'appui de chaque aile de la lyre de retenue pour faire passer la lyre de retenue de la position rétractée à la position expansée lors de la rotation du noyau.

Selon un mode de réalisation, le noyau peut comprendre une came supérieure et une came inférieure, présentant chacune une section sensiblement elliptique, la came inférieure et la came supérieure pouvant être conçues pour exercer un effort sur les surfaces d'appui inférieures et supérieures des ailes de la lyre de retenue pour faire passer la lyre de retenue de la position rétractée à la position expansée lors de la rotation du noyau.

Le noyau peut présenter deux méplats diamétralement opposés et une région d'extrémité de chaque aile de la lyre de retenue peut présenter un retour configuré pour exercer un effort sur le méplat pour maintenir la lyre de retenue en position expansée.

L'organe de verrouillage peut comprendre une cage quadrangulaire convergente configurée pour accueillir la lyre de retenue et le noyau. La cage peut présenter, deux fenêtres permettant chacune à une aile de la lyre de retenue de saillir de la cage, et un perçage permettant au noyau d'être lié en rotation par rapport à la cage.

Selon un mode de réalisation, le noyau peut présenter un palier circulaire présentant au moins une dent et la cage peut comprendre au moins deux butées configurées pour délimiter la rotation du palier circulaire du noyau.

En position rétractée de la lyre de retenue, l'organe de verrouillage peut présenter un jeu d'extraction entre les retours de la lyre de retenue et le palier circulaire du noyau. Le jeu d'extraction peut être conçu pour permettre le glissement des retours le long du noyau.

En position déployée de la lyre de retenue, l'organe de verrouillage peut présenter un jeu de verrouillage entre les retours de la lyre de retenue et le palier circulaire du noyau, le jeu de verrouillage peut être inférieur au jeu d'extraction, pour limiter le glissement des retours le long du noyau.

Une portion d'extrémité du profilé peut présenter un élément d'amortissement configuré pour être pincé entre le pourtour de l'ouverture quadrangulaire et le profilé de la barre de toit.

D'autres caractéristiques et avantages de la présente invention se dégageront de la description qui va suivre, en regard des dessins annexés qui représentent, à titre d'exemple non limitatif, plusieurs formes de réalisation de l'invention.
- La figure 1 est une vue en perspective, de dessous, d'une barre de toit selon l'invention ;
- La figure 2 est une vue en perspective, de dessus, d'une barre de toit selon l'invention ;
- La figure 3 est une vue en perspective d'un organe de verrouillage selon l'invention ;
- La figure 4 est une vue en perspective d'un levier selon un mode de réalisation de l'invention ;
- La figure 5 est une vue en perspective d'un logement d'un profilé selon un mode de réalisation de l'invention ;
- La figure 6 est une vue en perspective, en coupe, d'un noyau et d'une lyre de retenue en position rétractée, selon un premier mode de réalisation de l'invention ;
- La figure 7 est une vue en perspective, en coupe, d'un noyau et d'une lyre de retenue en position expansée, selon un premier mode de réalisation de l'invention ;
- La figure 8 est une vue en perspective d'un levier, un noyau et une lyre de retenue, selon un deuxième mode de réalisation de l'invention ;
- La figure 9 est une vue en perspective d'un noyau selon un deuxième mode de réalisation de l'invention ;
- La figure 10 est une vue en perspective d'un noyau et d'une lyre de retenue en position rétractée selon un deuxième mode de réalisation de l'invention ;
- La figure 11 est une vue de dessus d'une cage et d'un secteur circulaire d'un noyau ;
- La figure 12 est une vue de dessus d'une cage et d'un secteur circulaire d'un noyau ;
- La figure 13 est une vue en coupe de l'introduction d'une lyre de retenue dans une ouverture quadrangulaire, selon un deuxième mode de réalisation de l'invention ;
- La figure 14 est une vue en coupe, d'une lyre de retenue en position rétractée, dans une ouverture quadrangulaire, selon un deuxième mode de réalisation de l'invention ;
- La figure 15 est une vue en coupe, d'une lyre de retenue en position expansée, dans une ouverture quadrangulaire, selon un deuxième mode de réalisation de l'invention ;

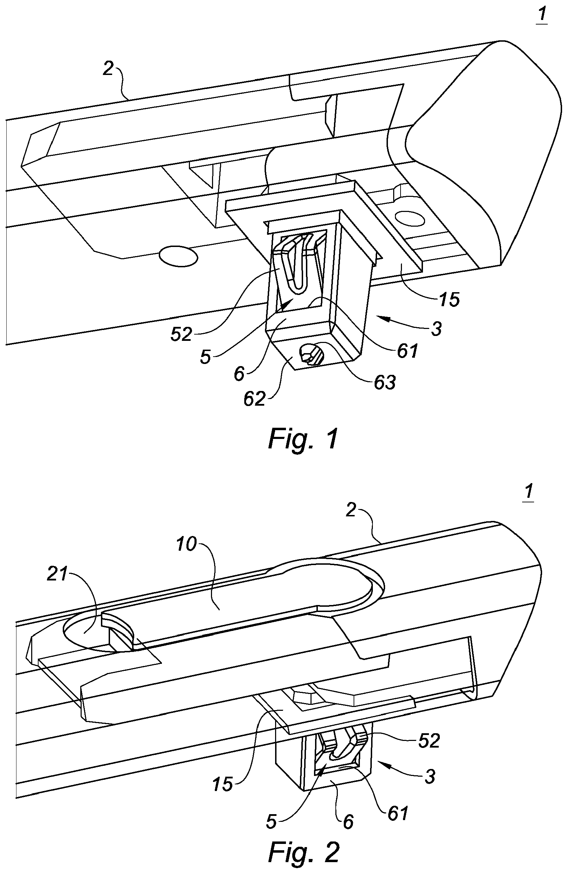

Comme on peut le voir sur les figures 1 et 2, l'invention concerne une barre de toit 1 qui comprend un profilé 2 à une extrémité duquel est positionné un organe de verrouillage 3 destiné à venir s'engager dans une ouverture quadrangulaire 4 positionnée sur le toit d'un véhicule (non représenté).

En référence aux figures 1, 2, 6 et 7, le profilé 2 peut être un profilé métallique ou plastique adapté pour supporter par exemple un coffre de toit ou un porte-vélos.

De plus, comme on peut l'observer sur la figure 2, le profilé 2 peut présenter un logement 21 dont la fonction sera détaillée ultérieurement.

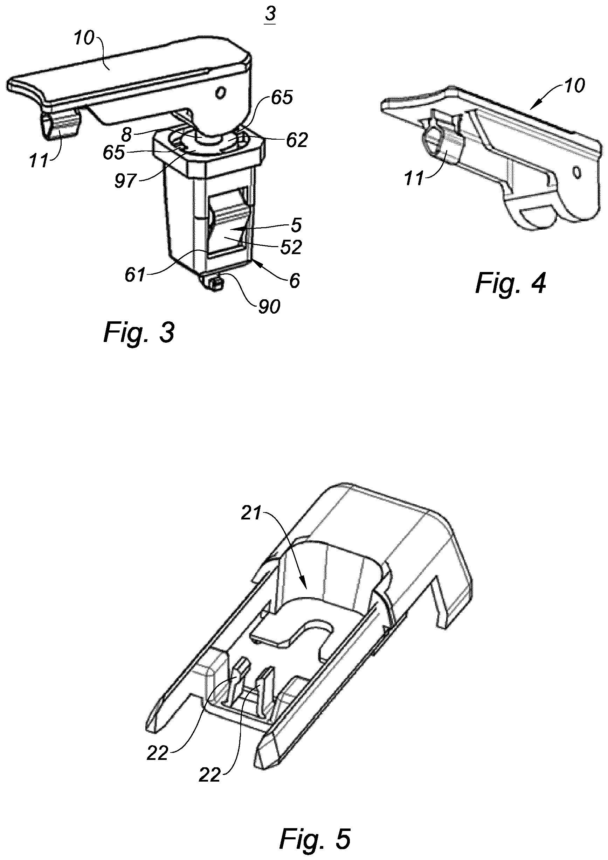

Selon un mode de réalisation présenté à la figure 5, le logement 21 présente deux lames d'encliquetage 22.

En référence à la figure 3, l'organe de verrouillage 3 comprend essentiellement une lyre de retenue 5 positionnée dans une cage 6, un noyau 8 et un levier 10.

Il est remarquable sur les figures 1 et 2 que l'organe de verrouillage 3 traverse le profilé 2, le levier 10 étant positionné dans le logement 21 et la cage 6 étant positionnée contre une face opposée du profilé 2. Comme on peut l'observer sur la figure 1, un élément d'amortissement 15 peut être positionné autour de la cage 6, contre le profilé 2. Selon l'exemple ici présenté, l'élément d'amortissement 15 est un joint élastomère

Le levier 10 est un levier à came. Selon un mode de réalisation présenté aux figures 3 et 4, le levier 10 présente une protubérance 11 configurée pour être encliquetée entre les deux lames d'encliquetage 22 du logement 21.

Le levier 10 est lié en rotation à un noyau 8 asymétrique qui sera décrit ultérieurement.

La cage 6 présente une géométrie quadrangulaire convergente. De plus, la cage 6 présente deux fenêtres 61 opposées l'une par rapport à l'autre.

En outre, comme on peut l'observer notamment sur la figure 1, le fond 62 de la cage 6 présente un perçage 63 dont la fonction sera détaillée ci-après.

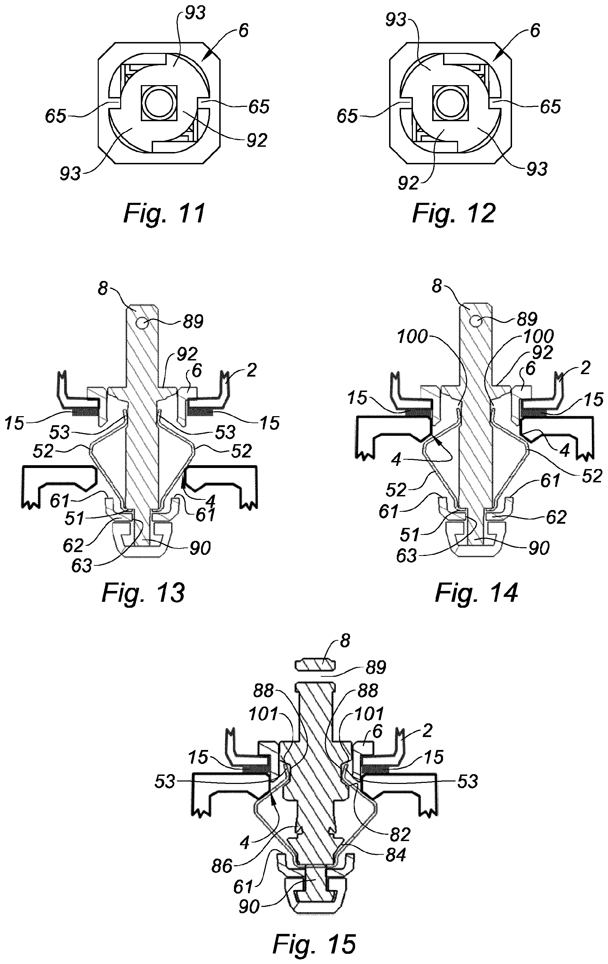

Selon un mode de réalisation présenté aux figures 11 et 12, une face supérieure de la cage 6 peut présenter des butées 65.

La cage 6 contient la lyre de retenue 5.

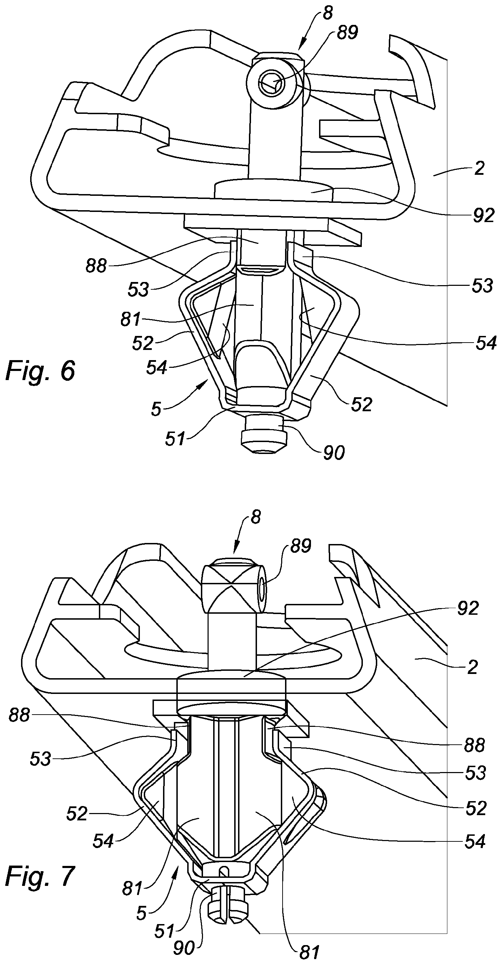

En référence aux figures 6 à 8, la lyre de retenue 5 présente une surface de fond 51 munie d'un perçage et deux ailes 52 en forme de V.

Une région d'extrémité de chaque aile 52 présente un retour 53.

Selon un premier mode de réalisation présenté sur les figures 6 et 7, chaque aile 52 présente une nervure intérieure d'appui 54.

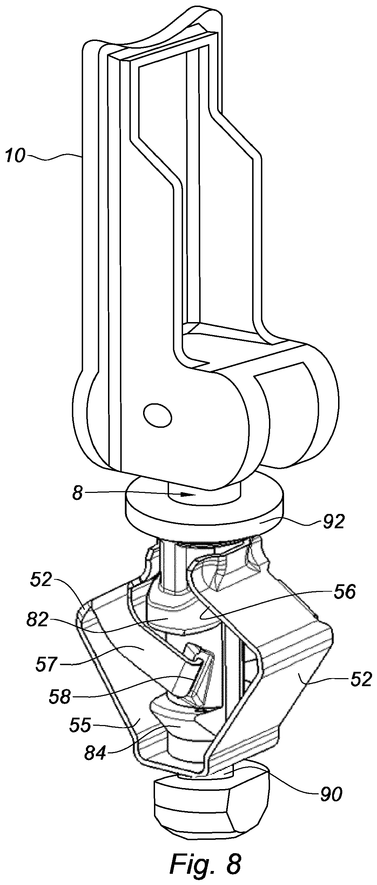

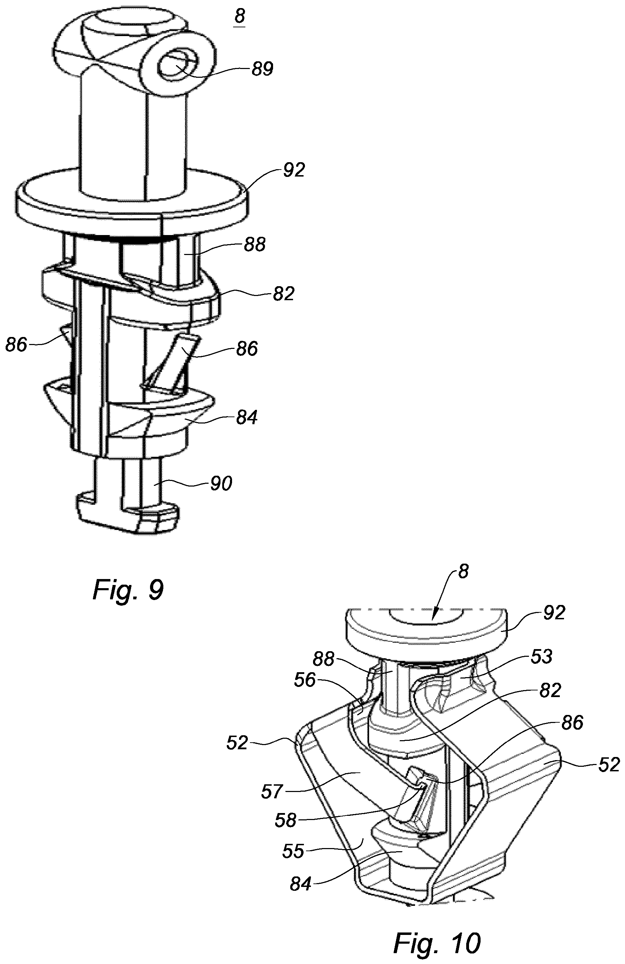

Selon un deuxième mode de réalisation présenté aux figures 8 et 10, chaque aile 52 présente une surface d'appui inférieure 55 et une surface d'appui supérieure 56. De plus, chaque aile 52 présente une patte 57 munie d'un crochet 58. Chaque patte 57 s'étend transversalement par rapport à l'aile 52 à laquelle elle est reliée. Les pattes 57 sont opposées l'une par rapport à l'autre, les crochets 58 étant positionnés en regard l'un de l'autre.

La lyre de retenue 5 peut, par exemple, être réalisée en acier ressort.

Le perçage de la surface de fond 51 de la lyre de retenue 5 est conçu pour permettre de lier en pivot la lyre de retenue 5 au noyau 8.

Selon un premier mode de réalisation présenté aux figures 6 et 7, le noyau 8 présente une came 81 à deux lobes. La came 81 présente une section sensiblement elliptique configurée pour exercer un effort sur les nervures intérieures d'appui 53 de la lyre de retenue 5. De plus, comme on peut l'observer, la came 81 présente deux surfaces biseautées adaptées à l'inclinaison des ailes 52 par rapport à la surface de fond 51 de la lyre de retenue 5.

Selon un deuxième mode de réalisation, représenté aux figures 9 et 10, le noyau 8 comprend une came supérieure 82 à deux lobes et une came inférieure 84 à deux lobes, présentant chacune une section sensiblement elliptique. La came inférieure 82 et la came supérieure 84 étant conçues pour exercer un effort sur les surfaces d'appui inférieures 55 et supérieures 56 des ailes 52 de la lyre de retenue 5.

De plus, il est remarquable que, selon le deuxième mode de réalisation, le noyau 8 présente deux dents 86, diamétralement opposées, positionnées entre la came inférieure 82 et la came supérieure 84.

Chaque dent 86 est inclinée par rapport à un axe longitudinal du noyau 8.

En outre, selon les deux modes de réalisation ici présentés, le noyau 8 présente deux méplats 88 diamétralement opposés. Les méplats 88 sont conçus pour être chacun en contact avec un retour 53 d'une aile 52.

Le noyau 8 présente une première extrémité munie d'un perçage transversal 89 permettant de lier en rotation le noyau 8 au levier 10.

Une deuxième extrémité du noyau 8 présente un plot rainuré 90 configuré pour être introduit dans le perçage de la surface de fond 51 de la lyre de retenue 5 et dans le perçage 63 de la cage 6.

Selon un mode de réalisation, le plot rainuré 90 peut présenter une fente longitudinale qui permet de faciliter l'introduction du plot rainuré 90 dans le perçage de la surface de fond 51 de la lyre de retenue 5 et dans le perçage 63 de la cage 6

En outre, selon un mode de réalisation, le noyau 8 présente un palier circulaire 92. Selon un mode de réalisation présenté sur les figures 11 et 12, le palier circulaire 92 présente deux secteurs angulaires délimités chacun par deux dents 93.

A l'usage, tel que représenté sur les figure 13 à 15 l'organe de verrouillage 3 peut être engagé dans une ouverture quadrangulaire 4 positionnée sur le toit d'un véhicule, pour verrouiller la barre de toit 1 au toit d'un véhicule.

D'une manière avantageuse, la forme convergente de la cage 6 permet de positionner aisément l'organe de verrouillage 3 dans l'ouverture quadrangulaire 4.

L'engagement de l'organe de verrouillage 3 dans l'ouverture quadrangulaire 4, est réalisé en plaçant la lyre de retenue 5 en position rétractée.

Il est précisé que la position rétractée est la position naturelle de la lyre de retenue 5.

En référence, à la figure 14, en position rétractée, la lyre de retenue 5 est encliquetable dans l'ouverture quadrangulaire 4.

Pour verrouiller la liaison entre l'ouverture quadrangulaire 4 et l'organe de verrouillage 3, il est nécessaire de faire pivoter le levier 10. La rotation du levier 10 provoque la rotation du noyau 8.

Selon le mode de réalisation présenté aux figures 11 et 12, les butées 65 de la cage 6 coopèrent avec les dents 93 du palier circulaire 92 pour délimiter la rotation du noyau 8.

Lors de la rotation du noyau 8, la, ou les, came 81-82-84 du noyau 8 exerce un effort sur les nervures intérieures d'appui 54 ou les surface d'appui inférieure 55 et supérieure 56 de chaque aile 52 de la lyre de retenue 5. Ce qui provoque l'écartement des ailes 52 de la lyre de retenue 5. Ainsi, la lyre de retenue 5 passe en position expansée. Comme on peut l'observer sur la figure 15, en position expansée, une portion de chaque aile 52 vient en appui contre un pan incliné de l'ouverture quadrangulaire 4.

En position expansée, les retours 53 des ailes 52 sont chacun en appui contre un méplat 88.

Lorsque la lyre de retenue 5 est en position expansée, le levier 10 peut être rabattu dans le logement 21. Selon le mode de réalisation présenté aux figures 3 à 5, la protubérance 11 du levier 10 est encliquetée entre les deux lames d'encliquetage 22 du logement 21. Cette disposition technique permet avantageusement de maintenir le verrouillage de l'organe de verrouillage 3 dans l'ouverture quadrangulaire 4, en cas, par exemple, d'un choc lors d'un accident, le levier 10 reste fixe dans son logement limitant le risque de déverrouillage du verrou. Ce système de verrouillage est conçu de telle sorte qu'il est nécessaire de réaliser deux mouvements combinés exercés suivant des directions différentes : rotation selon une direction du levier puis rotation selon une autre direction du noyau.. Ainsi, cette disposition technique permet d'augmenter la sécurité de la barre de toit 1 selon l'invention en limitant les risques de déverrouillage liés à des chocs.

Une rotation du levier 10 permet de faire passer la lyre de retenue 5 en position rétracter, pour pouvoir extraire l'organe de verrouillage 3 de l'ouverture quadrangulaire 4.

Le noyau 8 est conçu de telle sorte, que lorsque la lyre de retenue 5 est en position rétractée, un jeu d'extraction 100 (figure 14) important existe entre les retours 53 de la lyre de retenue 5 et le palier circulaire 92 du noyau 8. Le jeu d'extraction 100 permet à la lyre de retenue 5 de pouvoir se comprimer lors de l'extraction de l'organe de verrouillage 3 de l'ouverture quadrangulaire en laissant les retours 53 glisser le long du noyau 8.

En position expansée de la lyre de retenue 5, le jeu de verrouillage 101 (figure 15), entre les retours 53 de la lyre de retenue 5 et le palier circulaire 92 du noyau 8, est faible de telle sorte que le glissement des retours 53 le long du noyau 8, sur les méplats 88, est impossible ou très limité.

Cette configuration ajoute une sécurité supplémentaire à ce système de verrouillage.

Selon le premier mode de réalisation, présenté sur les figures 6 et 7, la lyre de retenue 5 reprend naturellement sa position rétractée dès que la came 81 du noyau 8 n'exerce plus d'effort sur les nervures intérieures d'appui 54 des ailes 52 de la lyre de retenue 5.

Selon le deuxième mode de réalisation, lors de la rotation du noyau 8, les dents 86 du noyau 8 exercent un effort de traction sur les crochets 58 des pattes 57. La traction exercée sur les crochets 58 et les pattes 57 est transmise aux ailes 52 de la lyre de retenue 5 et fait passer la lyre de retenue 5 en position rétractée.

Lorsque la lyre de retenue 5 est en position rétractée, l'organe de verrouillage 3 peut être extrait de l'ouverture quadrangulaire 4.

Ainsi, l'invention propose une barre de toit qui peut être fixée au toit d'un véhicule en utilisant un mécanisme de verrouillage léger et sécurisé.

Bien entendu, l'invention ne se limite pas aux seules formes d'exécution représentées ci-dessus, mais elle embrasse au contraire toutes les formes de réalisation.

## Revendications

1. Barre de toit (1) qui comprend un profilé (2) et un organe de verrouillage (3) destiné à venir s'engager dans une ouverture quadrangulaire (4) positionnée sur le toit d'un véhicule, l'organe de verrouillage comprenant une lyre de retenue (5) et un noyau (8), la barre de toit (1) étant **caractérisée en ce que** le noyau (8) est asymétrique et lié en rotation dans la lyre de retenue (5) pour faire passer, lors de la rotation du noyau (8), la lyre de retenue (5) d'une position rétractée dans laquelle la lyre de retenue (5) est amovible de l'ouverture quadrangulaire (4) à une position expansée dans laquelle la lyre de retenue (5) est verrouillée dans l'ouverture quadrangulaire (4).

2. Barre de toit (1) selon la revendication 1, **caractérisée en ce que** le noyau (8) est relié à un levier (10) de commande manoeuvrable entre une position de déverrouillage dans laquelle la lyre de retenue (5) est rétractée et une position de verrouillage dans laquelle lyre de retenue (5) est expansée.

3. Barre de toit (1) selon la revendication 2, **caractérisée en ce que** le profilé (2) présente un logement (21) configuré pour recevoir le levier (10) de commande en position de verrouillage.

4. Barre de toit (1) selon la revendication 3, **caractérisée en ce que** le levier (10) de commande présente une protubérance (11) configurée pour être encliquetée dans un organe d'encliquetage du logement (21).

5. Barre de toit (1) selon l'une des revendications 1 à 4, **caractérisée en ce que** le noyau (8) présente au moins une dent (86) et la lyre de retenue présente au moins une patte (57) configurée pour s'engager sur la dent (86), pour faire passer la lyre de retenue (5) en position rétractée.

6. Barre de toit (1) selon l'une des revendications 1 à 5, **caractérisée en ce que** la lyre de retenue (5) présente deux ailes (52) incurvées en forme de V, une portion de chaque aile (52) étant configurée pour venir en appui contre un pan incliné respectif de l'ouverture quadrangulaire (4).

7. Barre de toit (1) selon la revendication 6, **caractérisée en ce que** chaque aile (52) de la lyre de retenue (5) présente une nervure intérieure d'appui (54) contre le noyau (8).

8. Barre de toit (1) selon la revendication 6, **caractérisée en ce que** chaque aile (52) de la lyre de retenue (5) présente une surface d'appui inférieure (55) et une surface d'appui supérieure (56), contre le noyau (8).

9. Barre de toit (1) selon la revendication 7, **caractérisée en ce que** le noyau (8) comprend une came (81) présentant une section sensiblement elliptique, la came (81) étant configurée pour exercer un effort sur la nervure intérieure d'appui (54) de chaque aile (52) de la lyre de retenue (5) pour faire passer la lyre de retenue (5) de la position rétractée à la position expansée lors de la rotation du noyau (8).

10. Barre de toit (1) selon la revendication 8, **caractérisée en ce que** le noyau (8) comprend une came supérieure (82) et une came inférieure (84), présentant chacune une section sensiblement elliptique, la came inférieure (84) et la came supérieure (82) étant conçues pour exercer un effort sur les surfaces d'appui inférieures (55) et supérieures (56) des ailes (52) de la lyre de retenue (5) pour faire passer la lyre de retenue (5) de la position rétractée à la position expansée lors de la rotation du noyau (8).

11. Barre de toit (1) selon l'une des revendications 6 à 10 **caractérisée en ce que** le noyau (8) présente deux méplats (88) diamétralement opposés et une région d'extrémité de chaque aile de la lyre de retenue présente un retour (53) configuré pour exercer un effort sur le méplat (88) pour maintenir la lyre de retenue (5) en position expansée.

12. Barre de toit (1) selon l'une des revendications 6 à 11, **caractérisée en ce que** l'organe de verrouillage (3) comprend une cage (6) quadrangulaire convergente configurée pour accueillir la lyre de retenue (5) et le noyau (8), la cage (6) présentant, deux fenêtres (61) permettant chacune à une aile (52) de la lyre de retenue (5) de saillir de la cage (6), et un perçage (63) permettant au noyau (8) d'être lié en rotation par rapport à la cage (6).

13. Barre de toit (1) selon la revendication 12, **caractérisée en ce que** le noyau (8) présente un palier circulaire (92) présentant au moins une dent (93) et la cage (6) comprend au moins deux butées (65) configurées pour délimiter la rotation du palier circulaire (92) du noyau (8).

14. Barre de toit (1) selon la revendication 13, **caractérisée en ce que**, en position rétractée de la lyre de retenue (5), l'organe de verrouillage (3) présente un jeu d'extraction (100) entre les retours (53) de la lyre de retenue (5) et le palier circulaire (92) du noyau (8), le jeu d'extraction (100) étant conçu pour permettre le glissement des retours (53) le long du noyau (8).

15. Barre de toit (1) selon la revendication 14, **caractérisée en ce que**, en position déployée de la lyre de retenue (5), l'organe de verrouillage (3) présente un jeu de verrouillage (101) entre les retours (53) de la lyre de retenue (5) et le palier circulaire (92) du noyau (8), le jeu de verrouillage (101) est inférieur au jeu d'extraction (100), pour limiter le glissement des retours (53) le long du noyau (8).

## Patentansprüche

1. Dachträger (1), der ein Profil (2) und ein Verriegelungsglied (3) umfasst, das dazu bestimmt ist, in einer viereckigen Öffnung (4) in Eingriff zu gehen, die auf dem Dach eines Fahrzeugs positioniert ist, wobei das Verriegelungsglied eine Haltespreize (5) und einen Kern (8) umfasst, wobei der Dachträger (1) **dadurch gekennzeichnet ist, dass** der Kern (8) asymmetrisch und drehend in der Haltespreize (5) festgemacht ist, um beim Drehen des Kerns (8) die Haltespreize (5) von einer eingeklappten Stellung, in der die Haltespreize (5) aus der viereckigen Öffnung (4) herausgenommen werden kann, in eine ausgeklappte Stellung zu bringen, in der die Haltespreize (5) in der viereckigen Öffnung (4) verriegelt ist.

2. Dachträger (1) nach Anspruch 1, **dadurch gekennzeichnet, dass** der Kern (8) mit einem Bedienhebel (10) verbunden ist, der zwischen einer Entriegelungsstellung, in der die Haltespreize (5) eingeklappt ist, und einer Verriegelungsstellung betätigt werden kann, in der die Haltespreize (5) ausgeklappt ist.

3. Dachträger (1) nach Anspruch 2, **dadurch gekennzeichnet, dass** das Profil (2) eine Aufnahme (21) aufweist, die dafür konfiguriert ist, den Bedienhebel (10) in Verriegelungsstellung aufzunehmen.

4. Dachträger (1) nach Anspruch 3, **dadurch gekennzeichnet, dass** der Bedienhebel (10) einen Vorsprung (11) aufweist, der dafür konfiguriert ist, in ein Rastglied der Aufnahme (21) eingerastet zu werden.

5. Dachträger (1) nach einem der Ansprüche 1 bis 4, **dadurch gekennzeichnet, dass** der Kern (8) mindestens eine Zinke (86) aufweist, und die Haltespreize mindestens eine Klaue (57) aufweist, die dafür konfiguriert ist, an der Zinke (86) einzugreifen, um die Haltespreize (5) in eingeklappte Stellung zu bringen.

6. Dachträger (1) nach einem der Ansprüche 1 bis 5, **dadurch gekennzeichnet, dass** die Haltespreize (5) zwei gekrümmte Schenkel (52) in V-Form aufweist, wobei ein Abschnitt jedes Schenkels (52) dafür konfiguriert ist, an einer jeweiligen schrägen Ebene der viereckigen Öffnung (4) in Auflage zu gehen.

7. Dachträger (1) nach Anspruch 6, **dadurch gekennzeichnet, dass** jeder Schenkel (52) der Haltespreize (5) eine innere Auflagestrebe (54) am Kern (8) aufweist.

8. Dachträger (1) nach Anspruch 6, **dadurch gekennzeichnet, dass** jeder Schenkel (52) der Haltespreize (5) eine untere Auflagefläche (55) und eine obere Auflagefläche (56) am Kern (8) aufweist.

9. Dachträger (1) nach Anspruch 7, **dadurch gekennzeichnet, dass** der Kern (8) eine Nocke (81) umfasst, die einen im Wesentlichen elliptischen Querschnitt aufweist, wobei die Nocke (81) dafür konfiguriert ist, beim Drehen des Kerns (8) eine Kraft auf die innere Auflagestrebe (54) jedes Schenkels (52) der Haltespreize (5) auszuüben, um die Haltespreize (5) von der eingeklappten Stellung in die ausgeklappte Stellung zu bringen.

10. Dachträger (1) nach Anspruch 8, **dadurch gekennzeichnet, dass** der Kern (8) eine obere Nocke (82) und eine untere Nocke (84) umfasst, die jede einen im Wesentlichen elliptischen Querschnitt aufweisen, wobei die untere Nocke (84) und die obere Nocke (82) dafür konzipiert sind, beim Drehen des Kerns (8) eine Kraft auf die unteren (55) und oberen Auflageflächen (56) der Schenkel (52) der Haltespreize (5) auszuüben, um die Haltespreize (5) von der eingeklappten Stellung in die ausgeklappte Stellung zu bringen.

11. Dachträger (1) nach einem der Ansprüche 6 bis 10, **dadurch gekennzeichnet, dass** der Kern (8) zwei diametral gegenüberliegende Abflachungen (88) aufweist, und ein Endbereich jedes Schenkels der Haltespreize eine Kehre (53) aufweist, die dafür konfiguriert ist, eine Kraft auf die Abflachung (88) auszuüben, um die Haltespreize (5) in ausgeklappter Stellung zu halten.

12. Dachträger (1) nach einem der Ansprüche 6 bis 11, **dadurch gekennzeichnet, dass** das Verriegelungsglied (3) einen viereckigen, zusammenlaufenden Käfig (6) umfasst, der dafür konfiguriert ist, die Haltespreize (5) und den Kern (8) aufzunehmen, wobei der Käfig (6) zwei Fenster (61) aufweist, die es jedes einem Schenkel (52) der Haltespreize (5) ermöglichen, aus dem Käfig (6) vorzuspringen, und eine Bohrung (63), die es dem Kern (8) ermöglicht, in Bezug auf den Käfig (6) drehend festgemacht zu werden.

13. Dachträger (1) nach Anspruch 12, **dadurch gekennzeichnet, dass** der Kern (8) ein Rundlager (92) aufweist, das mindestens eine Zinke (93) aufweist, und der Käfig (6) mindestens zwei Anschläge (65) umfasst, die dafür konfiguriert sind, die Drehung des Rundlagers (92) des Kerns (8) zu begrenzen.

14. Dachträger (1) nach Anspruch 13, **dadurch gekennzeichnet, dass** das Verriegelungsglied (3) in eingeklappter Stellung der Haltespreize (5) ein Auszugsspiel (100) zwischen den Kehren (53) der Haltespreize (5) und dem Rundlager (92) des Kerns (8) aufweist, wobei das Auszugsspiel (100) dafür konzipiert ist, das Gleiten der Kehren (53) entlang des Kerns (8) zu ermöglichen.

15. Dachträger (1) nach Anspruch 14, **dadurch gekennzeichnet, dass** das Verriegelungsglied (3) in ausgefahrener Stellung der Haltespreize (5) ein Verriegelungsspiel (101) zwischen den Kehren (53) der Haltespreize (5) und dem Rundlager (92) des Kerns (8) aufweist, wobei das Verriegelungsspiel (101) kleiner ist als das Auszugsspiel (100), um das Gleiten der Kehren (53) entlang des Kerns (8) zu begrenzen.

## Claims

1. A roof bar (1) which comprises a profile (2) and a locking member (3) intended to be engaged in a quadrangular opening (4) positioned on the roof of a vehicle, the locking member comprising a retaining buckle blade (5) and a core (8), the roof bar (1) being **characterized in that** the core (8) is asymmetrical and rotatably connected in the retaining buckle blade (5) for switching, upon rotation of the core (8), the retaining buckle blade (5) from a retracted position in which the retaining buckle blade (5) is removable from the quadrangular opening (4) to an expanded position in which the retaining buckle blade (5) is locked in the quadrangular opening (4).

2. The roof bar (1) according to claim 1, **characterized in that** the core (8) is connected to a control lever (10) operable between an unlocking position in which the retaining buckle blade (5) is retracted and a locking position in which the retaining buckle blade (5) is expanded.

3. The roof bar (1) according to claim 2, **characterized in that** the profile (2) has a housing (21) configured to receive the control lever (10) in the locking position.

4. The roof bar (1) according to claim 3, **characterized in that** the control lever (10) has a protuberance (11) configured to be snap-fitted into a snap-fitting member of the housing (21).

5. The roof bar (1) according to any of claims 1 to 4, **characterized in that** the core (8) has at least one tooth (86) and the retaining buckle blade has at least one lug (57) configured to engage on the tooth (86), in order to switch the retaining buckle blade (5) to the retracted position.

6. The roof bar (1) according to any of claims 1 to 5, **characterized in that** the retaining buckle blade (5) has two V-shaped curved wings (52), a portion of each wing (52) being configured to bear against a respective inclined sidewall of the quadrangular opening (4).

7. The roof bar (1) according to claim 6, **characterized in that** each wing (52) of the retaining buckle blade (5) has an inner bearing rib (54) for bearing against the core (8).

8. The roof bar (1) according to claim 6, **characterized in that** each wing (52) of the retaining buckle blade (5) has a lower bearing surface (55) and an upper bearing surface (56), for bearing against the core (8).

9. The roof bar (1) according to claim 7, **characterized in that** the core (8) comprises a cam (81) having a substantially elliptical section, the cam (81) being configured to exert a force on the inner bearing rib (54) of each wing (52) of the retaining buckle blade (5) for switching the retaining buckle blade (5) from the retracted position to the expanded position upon rotation of the core (8).

10. The roof bar (1) according to claim 8, **characterized in that** the core (8) comprises an upper cam (82) and a lower cam (84), each having a substantially elliptical section, the lower cam (84) and the upper cam (82) being adapted to exert a force on the lower (55) and upper (56) bearing surfaces of the wings (52) of the retaining buckle blade (5) for switching the retaining buckle blade (5) from the retracted position to the expanded position upon rotation of the core (8).

11. The roof bar (1) according to any of claims 6 to 10 **characterized in that** the core (8) has two diametrically opposite flats (88) and an end area of each wing of the retaining buckle blade has a return means (53) configured to exert a force on the flat (88) in order to maintain the retaining buckle blade (5) in the expanded position.

12. The roof bar (1) according to any of claims 6 to 11, **characterized in that** the locking member (3) comprises a convergent quadrangular cage (6) configured to accommodate the retaining buckle blade (5) and the core (8), the cage (6) having two windows (61) each allowing a wing (52) of the retaining buckle blade (5) to protrude from the cage (6), and a bore (63) allowing the core (8) to be rotatably connected relative to the cage (6).

13. The roof bar (1) according to claim 12, **characterized in that** the core (8) has a circular bearing (92) having at least one tooth (93) and the cage (6) comprises at least two stops (65) configured to delimit the rotation of the circular bearing (92) of the core (8).

14. The roof bar (1) according to claim 13, **characterized in that**, in the retracted position of the retaining buckle blade (5), the locking member (3) has an extraction clearance (100) between the return means (53) of the retaining buckle blade (5) and the circular bearing (92) of the core (8), the extraction clearance (100) being adapted to allow the sliding of the return means (53) along the core (8).

15. The roof bar (1) according to claim 14, **characterized in that**, in the deployed position of the retaining buckle blade (5), the locking member (3) has a locking clearance (101) between the return means (53) of the retaining buckle blade (5) and the circular bearing (92) of the core (8), the locking clearance (101) is smaller than the extraction clearance (100), in order to limit the sliding of the return means (53) along the core (8).
